# FASCICULE DE BREVET EUROPEEN

(11) **EP 0 684 551 B1**
(45) Date de publication et mention de la délivrance du brevet: **24.09.1997**
(21) Numéro de dépôt: 95401089.8
(22) Date de dépôt: 10.05.1995
(51) Int. Cl.: G06F 9/38

(54) **Circuit électronique et méthode pour l'utilisation d'un coprocesseur**
Elektronischer Schaltkreis und Verfahren für die Verwendung mit einem Koprozessor
Electronic circuit and method for use with a coprocessor

(30) Priorité: 10.05.1994 FR 9405763
(43) Date de publication de la demande: 29.11.1995
(73) Titulaire: SGS-THOMSON MICROELECTRONICS S.A., 94250 Gentilly (FR)
(72) Inventeur: Laborie, Jean-Louis, F-75116 Paris (FR)
(74) Mandataire: Schmit, Christian Norbert Marie

(56) Documents cités:
- US-A- 4 862 407
- WESCON PROCEEDINGS SAN FRANCISCO, CA, NOV 19-22, 1985, vol. 29, Novembre 1985 NEW YORK, NY , US, pages 1-17, BOB BEIMS 'The MC68020 32-Bit MPU: Opening New Application Doors'
- IBM TECHNICAL DISCLOSURE BULLETIN, vol. 33, no. 10B, Mars 1991 ARMONK, NY, US, pages 8-11, 'PROCOP - PROGRAMMABLE COPROCESSOR'
- IEEE JOURNAL OF SOLID-STATE CIRCUITS, vol. 25, no. 5, Octobre 1990 NEW YORK, NY, US, pages 1178-1188, D. ANDERSON ET AL 'The 68040 32-b Monolithic Processor'
- HEWLETT-PACKARD JOURNAL, vol. 43, No 4, Août 1992, pages 12-22; C.A GLEASON et al. : "VLSI Circuits for Low-End and Midrange PA-RISC Computers"
- ELECTRONIC DESIGN, No 2, 18 Janvier 1980, pages 33-34; D. BURSKY : "Z8000 CPUs expand processing power with new instructions, special processors"

## Description

La présente invention a pour objet un circuit électronique, notamment un circuit intégré, ainsi qu'une utilisation particulière de ce circuit, permettant de faire travailler un processeur avec un coprocesseur. Elle est plus particulièrement intéressante dans le domaine des processeurs de signaux numériques, dits DSP, dont une des particularités essentielles est la vitesse de traitement. De tels processeurs numériques sont notamment utilisés dans les transmissions pour effectuer des opérations de codage ou de cryptage, notamment dans des modems ou pour des traitements audio.

On connaît les processeurs de traitement numérique. Ceux-ci comportent un ensemble de circuits permettant de programmer un circuit de traitement programmable, afin de modifier des données en fonction de l'état programmé du circuit de traitement. La modification de l'état programmé du circuit de traitement est obtenue en appliquant à ce circuit des signaux numériques connus sous le nom d'instructions. Les différents circuits d'un processeur comportent notamment des registres d'instructions et des registres de données pour entrer en relation avec le circuit de traitement programmable, ainsi qu'un séquenceur qui organise dans le temps la succession de l'application des différentes instructions et des différentes données au circuit de traitement. Cette succession d'opérations s'appelle un programme. Normalement un tel processeur est susceptible d'effectuer n'importe quel type d'opérations du moment qu'on lui applique des instructions adéquates.

Un problème se pose néanmoins lorsque l'on veut faire effectuer certains traitements spécifiques, particulièrement compliqués et longs, d'une manière rapide. Dans ce cas on ne peut avoir recours au processeur normalement utilisé sous peine de retarder l'exécution des instructions ultérieures d'une durée trop importante liée à la complexité de ces traitements spécifiques. Par exemple, on peut considérer que le travail d'un processeur doit être cadencé à un rythme donné, chaque opération durant un temps de cycle. Il est possible de se trouver confronté pendant ce travail à une opération dont la durée est par exemple de cinquante fois le temps de cycle.

Pour effectuer néanmoins une telle opération plus longue pendant la durée d'un cycle ou au moins très vite, on a eu recours à la technique des coprocesseurs. Les coprocesseurs sont en pratique des circuits spécifiques susceptibles d'effectuer très rapidement, par exemple en trois ou quatre cycles, des opérations qui auraient pris cinquante cycles au processeur normal. La mise en service le moment venu d'un coprocesseur nécessite cependant que le processeur configure le coprocesseur, lui passe la main en lui transmettant les données nécessaires. Le coprocesseur se met alors à travailler d'une manière autonome et, dès qu'il a terminé son travail, il signale au processeur que les données traitées sont disponibles.

Un tel mode de travail n'est cependant pas envisageable lorsque les opérations à effectuer pendant un seul temps de cycle ne sont pas excessivement longues, quand par exemple elles ne durent que cinq temps de cycle. En effet, si la configuration du coprocesseur nécessite une durée de cinq cycles, pour lui faire ensuite effectuer le travail pendant un cycle, on ne gagne rien par rapport à ce qu'on aurait pu obtenir en faisant faire directement le travail par le processeur qui par essence est lent. On montrera que l'invention, bien qu'elle soit également utile lorsque le coprocesseur doit effectuer des traitements qui sont très longs et compliqués, est plus particulièrement intéressante pour résoudre les problèmes de réduction de la durée de mise en service du coprocesseur.

Le document WESCON PROCEEDINGS, San Francisco, Ca, 19-22 novembre 1985, volume 29, New York US, pages 1-17, Bob BEIMS "The MC68020 32-bit MPU : Opening New Application Doors" prévoit effectivement, lorsqu'une instruction à exécuter par le coprocesseur est reconnue par le processeur, un premier cycle de bus - dit de communication - pour initialiser le coprocesseur. C'est une perte de temps.

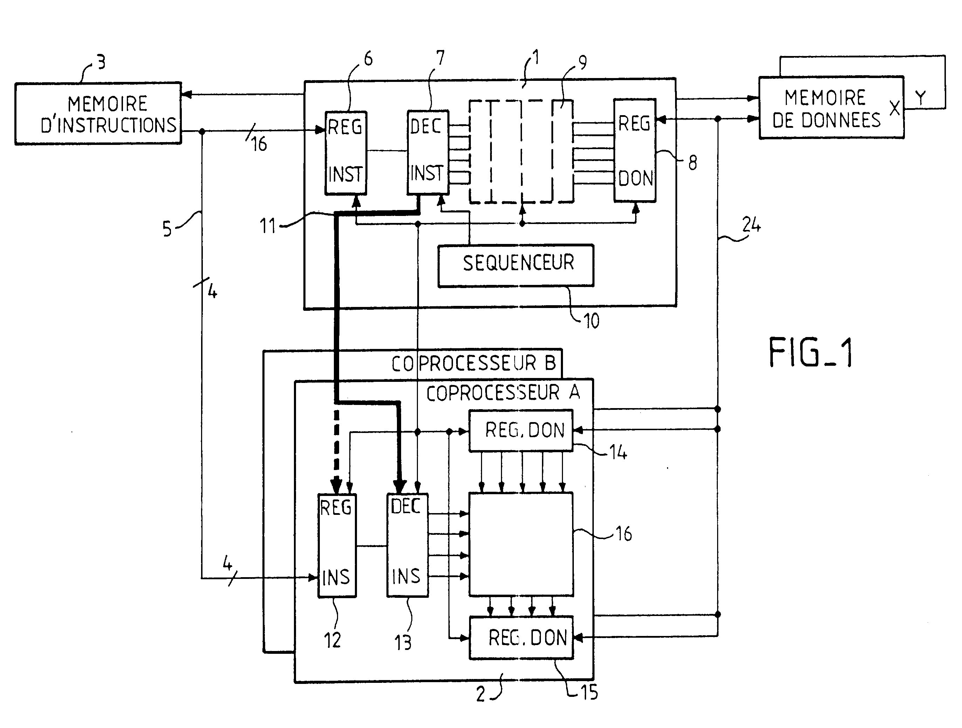

Le document HEWLETT-PACKARD JOURNAL, vol. 43, N° 4, Août 1992, pages 12-22; C.A. Gleason et al. "VLSI Circuits for Low-End and Midrange PA-RISC Computers" décrit des circuits intégrées VLSI, en particulier une unité centrale CPU et un coprocesseur point-flottant FPC. Comme indiqué en particulier à la page 15, colonne de droite, lignes 42 à 46 (voir aussi les figures 1 et 5), le coprocesseur est couplé de façon serrée (tightly coupled) avec le CPU et les antémémoires (caches). Le coprocesseur FPC est connecté directement à l'antémémoire d'instructions (cache s-RAMs), ce qui lui permet de décoder les instructions dès leur lecture (fetch) plutôt que d'attendre que le CPU lui indique quelle est l'opération à effectuer.

Le document ELECTRONIC DESIGN, N° 2, 18 janvier 1980, pages 33-34; D. BURSKY "Z8000 CPUs expand processing power with new instructions, special processors" traite des améliorations aux processeurs (CPUs) de la famille Z8000, en particulier de coprocesseurs (Extended Processing Units EPUs).

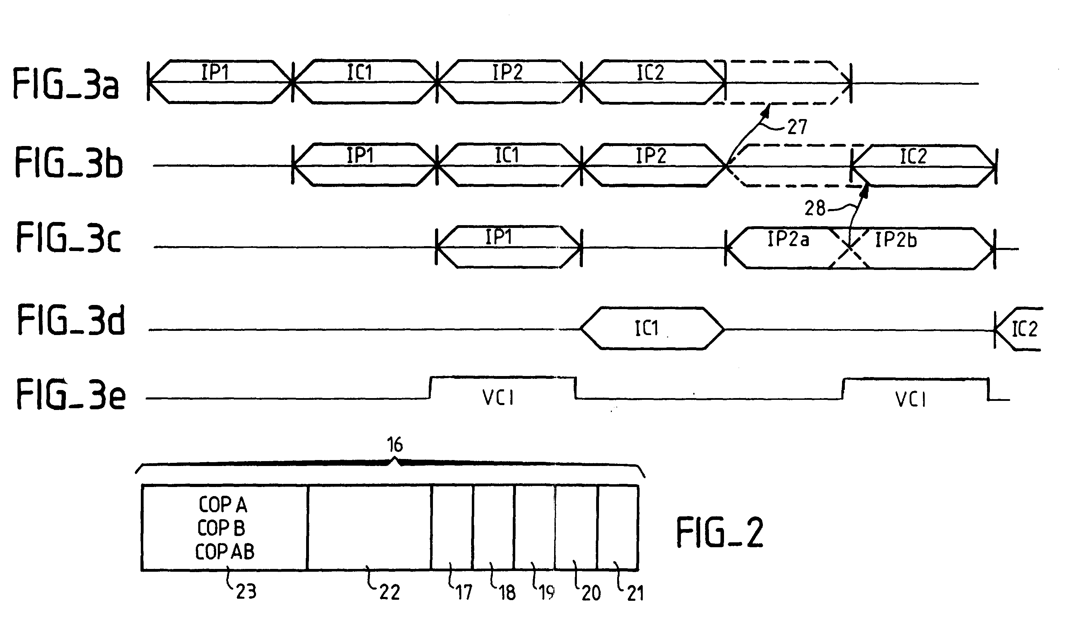

Les coprocesseurs (EPUs), car il peut y en avoir plusieurs, sont transparents à la plupart des activités et surveillent (monitor) les activités sur le bus du processeur CPU; si une instruction lue par le processeur est une instruction étendue (Extended Instruction), les coprocesseurs (EPUs) présents la capturent (latch). Si l'instruction doit être exécutée par un EPU donné, comme indiqué par un champ de l'instruction, alors le CPU et l'EPU sélectionné exécutent cette instruction (voir en particulier page 33, colonne de gauche, ligne 42 à colonne centrale, ligne 7 avec les figures 1 et 2). La nature de la coopération entre processeur et coprocesseur apparaît plus clairement à la page 33, première colonne, lignes 24-30, où il est dit que le coprocesseur EPU exécute ses tâches sur des données résidant dans les registres internes, et que le processeur principal CPU et le logiciel sont chargés des transferts d'information vers et depuis les registres, et d'indiquer au coprocesseur quelle opération il doit effectuer.

De telles solutions sont cependant significatives de perte de place sur le circuit intégré, et par ailleurs pas facilement intégrables dans le schéma d'un circuit intégré existant.

Ainsi, par opposition, l'invention est particulièrement intéressante lorsque, ayant préalablement défini des circuits généraux d'un processeur on cherche, sur un même circuit intégré électronique, à réaliser des fonctions complémentaires. Dans ce cas il serait possible de redessiner un circuit intégré en entier, puisqu'en pratique un coprocesseur est un circuit spécifique dédié au traitement de certaines opérations peu habituelles, connues, et compliquées. Mais l'élaboration d'un nouveau circuit intégré, pour chaque besoin différent, est une opération trop complexe si elle implique la remise en question de la totalité du circuit.

Avec le système de l'invention il est possible de garder le coeur du circuit toujours identique: le processeur est toujours conservé. Par contre, pour certaines opérations spécifiques qui doivent être menées particulièrement rapidement, on réalise sur un même circuit intégré un coprocesseur spécifique. Le mode d'échange préconisé par l'invention entre le processeur et le coprocesseur est alors particulièrement propice à une telle modification. Le coprocesseur comprend de préférence des circuits pour traiter des données selon des instructions qui lui sont également transmises.

La particularité de l'invention se situe dans le fait qu'on utilise pour piloter le coprocesseur des commandes délivrées par un séquenceur du processeur. En outre, le processeur et le coprocesseur sont reliés au même bus de sortie d'une mémoire de données et reçoivent en même temps les instructions lues dans cette mémoire de données. Tous deux comportent un décodeur d'instructions. Selon l'invention le décodeur d'instructions du processeur comporte des circuits pour reconnaître qu'une instruction doit être exécutée par le coprocesseur et pour produire un signal de reconnaissance correspondant. Ce signal de reconnaissance est alors envoyé au coprocesseur pour en valider le fonctionnement. Comme dans l'invention le processeur et le coprocesseur sont tous les deux en parallèle, le décodage de l'instruction par le coprocesseur, qui s'effectue en même temps que le décodage de l'instruction par le processeur, est ainsi validé de sorte que le coprocesseur peut exécuter l'instruction. De préférence l'exécution de l'instruction se produit dans un cycle suivant son décodage et le coprocesseur est capable d'exécuter toutes les instructions que son décodeur a valablement décodées.

Dans l'invention le temps de travail du coprocesseur d'assistance est de préférence limité à un cycle du temps de travail du processeur principal. Il est cependant possible de solliciter plusieurs fois de suite le coprocesseur à l'initiative du processeur.

Le principe de décodage retenu dans l'invention pour mettre en service le coprocesseur est particulièrement souple et bien adapté à un travail quasiment en parallèle du processeur et du coprocesseur. En outre, afin de simplifier la réalisation du coprocesseur, on a prévu que toutes les opérations de transfert de données à partir d'une mémoire de données à destination du coprocesseur soient faites à l'initiative du processeur. Ainsi, pour une instruction qui devait être effectuée par le coprocesseur, le processeur est en charge de fournir au coprocesseur au début du traitement des données à traiter et de prélever à la fin du traitement les données traitées.

L'invention a donc pour objet un circuit électronique comportant une mémoire d'instruction, un processeur de traitement et un coprocesseur de traitement, dans lequel
- le processeur et le coprocesseur sont reliés en parallèle à la mémoire d'instructions par au moins certains des fils d'un bus de sortie de données de cette mémoire d'instructions pour recevoir en même temps une instruction provenant de cette mémoire d'instructions;
- le processeur et le coprocesseur comportent chacun un décodeur d'instructions,
le circuit étant caractérisé en ce que
- le processeur comporte, dans son décodeur d'instructions, un circuit pour reconnaître, au décodage de cette instruction, que cette instruction reçue doit être exécutée, au moins en partie, par le coprocesseur, et pour transmettre au coprocesseur, pendant le cycle du processeur où cette instruction est décodée, un signal de reconnaissance correspondant;
- le coprocesseur comporte, dans son décodeur d'instructions, un circuit de décodage de cette instruction reçue et un circuit de validation pour l'autoriser, quand il reçoit le signal de reconnaissance, à exécuter ultérieurement cette instruction reçue, le décodage de l'instruction et sa validation se produisant au cours d'un même cycle.

Elle a également pour objet un procédé d'utilisation d'un processeur de traitement et d'un coprocesseur de traitement, comportant les étapes suivantes:
- on envoie simultanément au processeur et au coprocesseur au moins une même partie d'une instruction par au moins certains des fils d'un bus de sortie de données d'une mémoire d'instructions;
- pendant un même cycle du processeur, on décode l'instruction à la fois dans le processeur et dans le coprocesseur;
le procédé étant caractérisé en ce qu'il comporte les étapes suivantes:
- au cours d'un cycle donné du processeur, on décode l'instruction reçue dans le processeur et on y produit un signal de reconnaissance correspondant à ce qu'une instruction décodée doit être exécutée par le coprocesseur, et
- durant ce même cycle, le coprocesseur reçoit dans son circuit de validation ce signal de reconnaissance, et décode l'instruction reçue qu'il est ainsi autorisé à exécuter à un cycle suivant.

L'invention sera mieux comprise à la lecture de la description qui suit et à l'examen des figures qui l'accompagnent, celles-ci ne sont données qu'à titre indicatif et nullement limitatif de l'invention. Les figures montrent:
Figure 1: un circuit électronique conforme à l'invention;
Figure 2: une structure préférée d'un mot d'instruction utilisable dans le dispositif et le procédé de l'invention;
Figures 3a à 3e: des diagrammes temporels d'exécution de diverses opérations par les différentes parties du circuit de l'invention.

La figure 1 montre un circuit électronique conforme à l'invention. Ce circuit électronique comporte un processeur 1 de traitement et un coprocesseur 2 de traitement. Le processeur 1 de traitement est par exemple un processeur destiné à assurer toutes les fonctions courantes d'un modem de transmission de données numériques, notamment le contrôle de bits, la synchronisation avec des trames imposées depuis l'extérieur, de même qu'éventuellement certaines opérations de compression des données à transmettre. Le coprocesseur, dans un exemple, est destiné à mettre en oeuvre un algorithme de convolution et d'égalisation de type VITERBI connu. Ce coprocesseur doit travailler bien entendu en temps réel au rythme de l'arrivée ou du départ des données afin de les transmettre sans retard. Compte tenu de la complexité des opérations à mettre en oeuvre dans un tel algorithme de VITERBI, il n'était pas envisageable de les faire réaliser par le processeur 1, sauf à prévoir pour ce processeur 1 des circuits ultra rapides (donc difficiles à réaliser et chers), ou spécialisés pour cette fonction (donc nécessitant des efforts de redéfinition et de dessin trop importants pour en définitive n'associer qu'une fonction de codage de VITERBI, connue, à des fonctions de traitement générales, elles aussi connues).

Une des caractéristiques de l'invention est que le processeur 1 et le coprocesseur 2 sont reliés à une même mémoire d'instructions 3 par un bus 4 dont au moins certains des fils 5 aboutissent au coprocesseur 2. Comme montré sur la figure 2 un mot d'instruction, dans un exemple, est codé sur 16 bits et la mémoire 3 possède seize sorties en parallèle sur le bus 4 pour acheminer chacun de ces 16 bits. Comme on le verra plus loin le bus 5 n'est pas un bus à 16 bits mais un bus à 4 bits seulement, prélevant 4 bits parmi les 16 extraits de la mémoire 3.

Le processeur 1 comporte un registre d'instructions 6 classique qui est en relation en entrée avec le bus 4 et en sortie avec un décodeur d'instructions 7. Des données issues de mémoires de données X ou Y sont acheminées jusqu'à un registre 8 d'entrée / sortie de données du processeur 1. Des circuits 9 de traitement programmables du processeur 1 appliquent sur les données stockées dans le registre 8 des traitements programmés, paramètrés, par des données binaires stockées dans le registre d'instructions 6. Ces opérations sont effectuées au rythme d'un séquenceur 10. A l'issue du traitement les données sont disponibles dans le registre d'entrée / sortie 8 pour être distribuées aux différents périphériques auxquels est raccordé le processeur 1. L'architecture ainsi décrite est une architecture tout à fait classique d'un processeur de traitement. Le séquenceur 10 pilote notamment les circuits 6 à 9.

Une des particularités de l'invention est que le décodeur 7 d'instructions ne sert pas qu'à produire des signaux de contrôle utilisés lors de l'exécution de l'instruction, mais sert également à produire un signal de reconnaissance dit VCI acheminé par une connexion 11 (un fil ou plusieurs fils) à destination du coprocesseur 2. Le signal VCI est un signal qui indique que l'instruction décodée par le décodeur 7 est une instruction qui doit être exécutée par le coprocesseur 2.

Le coprocesseur 2 comporte, de la même façon que le processeur 1, un registre d'instructions 12, un décodeur d'instructions 13, un registre d'entrée de données 14, un registre de sortie de données 15, et un circuit 16 de traitement programmable. Le registre 12 est relié en entrée au bus 5 et en sortie au décodeur 13. Le décodeur 13 est relié en sortie au circuit 16. Le coprocesseur 2 peut comporter un séquenceur dans les cas où on lui demande d'exécuter des opérations relativement complexes enchaînant plusieurs instructions coprocesseur.

De préférence, les différents organes du coprocesseur 2 sont synchronisés par le séquenceur 10 du processeur 1. En pratique, compte tenu de ce qu'on cherche à faire exécuter pendant un temps de cycle du processeur 1 des opérations spécifiques par le coprocesseur 2, ce pilotage est des plus élémentaires: il est juste un cadencement d'horloge. Le circuit de traitement 16 est de préférence un circuit programmable mais spécifique. Il est programmable en ce sens qu'il est capable d'être paramètré par un certain nombre d'instructions disponibles dans le registre d'instructions 12. Par exemple ce nombre d'instructions dans l'invention, est de 16. C'est pour cela qu'il est seulement utile de transmettre 4 bits par le bus 5: 2⁴ = 16. Tout en étant faiblement programmable le circuit de traitement 16 peut cependant être un circuit spécifique très complexe effectuant d'une manière matérielle énormément d'opérations avec des connexions figées. A l'opposé le circuit de traitement 9 du processeur 1 est beaucoup plus souple et capable d'exécuter des opérations plus générales: il est susceptible d'exécuter environ un millier d'instructions différentes.

Une dernière particularité de l'invention est que le décodeur 13, le registre 12 ou n'importe lequel des autres circuits 14 à 16 comporte ou peut comporter une entrée de validation pour recevoir le signal VCI et pour autoriser l'exécution d'une instruction par le circuit 16 de traitement quand le signal de reconnaissance a été reçu. Sur la figure 1 on a seulement montré que le décodeur d'instructions 13, ou éventuellement (en tirets) le registre d'instructions 12, sont validés par le signal VCI. Le circuit de validation peut être très simple: il peut tout simplement comporter un interrupteur (un transistor) pour autoriser ou non le passage d'un signal de mise en service, du type "chip enable", d'un circuit élémentaire.

La figure 2 montre, dans un exemple avec 16 bits, l'allure d'un mot d'instruction extrait de la mémoire d'instructions 3. Les onze premiers bits représentent un code instruction, les cinq derniers bits correspondant à des modes d'échanges de données entre le processeur 1, ou le coprocesseur 2, et les mémoires de données X ou Y. Dans ces conditions le premier bit 17 de ces cinq derniers bits concerne la mémoire de données sélectionnée: la mémoire X ou Y. Le deuxième bit 18 concerne le mode de traitement de la mémoire: écriture ou lecture. Le troisième bit 19 concerne un pointeur d'adresse dans cette mémoire. Il y a deux pointeurs d'adresse possibles. Les deux derniers bits 20 et 21 concernent, dans un cas particulier d'utilisation, la désignation d'un incrément parmi quatre possibles dans la mémoire de données X ou Y. En effet il est connu dans des applications particulières d'effectuer des adressages de type tel que, d'un transfert de données à l'autre, les données prélevées ou écrites le soient avec des incréments d'adresse préétablis.

Les onze bits de code d'instruction du début du mot (encore que l'ordre présenté ici soit tout à fait indicatif et qu'on pourrait mélanger les bits) permettent de définir plus d'un millier d'instructions: le millier d'instructions utilisables par le processeur 1 et les 16 instructions utilisables par le coprocesseur 2. Les codes correspondants aux seize instructions utilisables par le coprocesseur 2 seront toujours placées dans une zone 22 de 4 bits du mot d'instruction qui correspond au 4 fils du bus 5 qui sont reliés au registre 12. Dans les 5 bits précédent on utilisera une configuration particulière de ces 5 bits pour indiquer que le coprocesseur 2 doit être mis en service.

Dans un exemple particulier qu'on expliquera plus loin, le coprocesseur 2 est en fait un circuit un peu plus complexe en ce sens qu'on peut, par extension, dire qu'il est divisé en deux coprocesseurs : un coprocesseur A et un coprocesseur B. Cette dualité d'expression est en partie justifiée parce qu'on a affaire à des mémoires de données X et Y doubles. On envisage donc que, pour certaines instructions, le circuit de traitement 16 recevra dans son registre 14 d'entrée de données des données provenant de la mémoire de données X ou de la mémoire de données Y. Par contre, si pour certains traitements il est nécessaire de traiter en même temps des données de la mémoire de données X et des données de la mémoire de données Y, il s'avère nécessaire de doubler le registre 14 d'entrée de données. Il en ira de même du registre de sortie de données 15 qui devra être doublé. En pratique, le circuit 16 de traitement sera complété par des circuits, non représentés, prenant en compte, en même temps, les données provenant de l'autre mémoire. Dans le cas d'une instruction de cette complexité, en effet, un coprocesseur A peut traiter les données de la mémoire de données X et le coprocesseur B celles de la mémoire de données Y, ou l'inverse. Ou encore un circuit de traitement d'un seul coprocesseur peut effectuer une opération concernant une donnée X et une donnée Y reçues simultanément.

Par contre le registre d'instructions 13, en principe, est le même pour les deux circuits de traitement puisqu'une seule instruction a été chargée pour le cycle donné. En pratique ceci résulte dans la nécessité de définir, dans la zone restante 23 de cinq bits du mot d'instruction de la figure 2, une, deux, voire trois, identifications différentes: une identification COP A pour dire que le coprocesseur A est impliqué, une identification COP B pour dire que le coprocesseur B est impliqué, ou même une identification COP AB pour dire que tous les deux sont impliqués. En pratique ces deux ou trois identifications peuvent être une représentation particulière des cinq premiers bits du mot d'instructions. On peut sélectionner un coprocesseur par un code dédié comme indiqué ci-dessus, ou bien valider son fonctionnement en écrivant un ordre à cet effet dans un registre de status interne du coprocesseur, dans une phase d'initialisation. En ce cas chaque coprocesseur doit d'abord être validé avant de pouvoir fonctionner, puis dévalidé. Un seul coprocesseur peut être actif à la fois. Le séquenceur 10 peut se charger de ces validations invalidations.

La particularité de l'invention est de produire dans le décodeur 7 le signal VCI à partir de ces représentations particulières. Ce mode de travail permet en définitive de définir 3 x 16 = 48 instructions exécutables par le coprocesseur 2. La détection, dans un décodeur 7 de type connu, de ces représentations ne présente pas de difficulté, de sorte que la production du ou des signaux VCI correspondant est aisée.

Les registres 8 d'entrée et de sortie de données, 14 d'entrée de données, ou 15 de sortie de données sont en relation avec les mémoires de données X ou Y par un bus de données 24 dont le nombre de fils dépend de la précision requise des données: 16 bits ou 32 bits voire plus. Le processeur 1 comporte également des circuits non représentés pour adresser la mémoire d'instructions 3 et les mémoires de données X et Y d'une manière classique.

Les figures 3a à 3e permettent d'expliquer plus clairement le fonctionnement du circuit de l'invention. La figure 3a montre l'opération par laquelle le processeur 1 adresse la mémoire d'instructions 3 afin d'aller chercher une instruction et afin de charger les différents registres d'instructions. Elle montre par exemple que le processeur 1 va d'abord chercher une instruction dite IP1 exécutable par le circuit 9 de traitement du processeur 1, puis une instruction IC1 exécutable par le circuit 16 de traitement du coprocesseur 2, puis une instruction IP2 exécutable par le processeur 1 et une instruction IC2 exécutable par le coprocesseur. Ainsi de suite, le séquenceur 10 organise la lecture de la mémoire 3 d'instructions en vue de délivrer sur les bus 4 et 5 les instructions désirées. Les instructions sont chargées dans les registres 6 et 12 en même temps.

La figure 3b montre le décodage de ces instructions à un cycle de travail suivant, à la fois dans le décodeur 7 d'instructions et le décodeur 13 d'instructions qui sont branchés en parallèle. Si le signal VCI validant une instruction coprocesseur est actif, le fonctionnement du décodeur 13 est validé. Ainsi ces décodeurs décodent, aux cycles suivant leur chargement dans les registres d'instructions, IP1, IC1, IP2. On constate cependant que l'instruction IC2 n'est pas décodée dans le cycle suivant celui au cours duquel l'instruction IP2 est décodée. Ceci va être expliqué plus loin.

La figure 3c montre l'exécution par le processeur 1 des instructions qui lui sont destinées. La figure 3d montre l'exécution par le coprocesseur 2 des instructions qui lui sont destinées. La figure 3e montre le signal VCI actif à un cycle de décodage des instructions , précédant celui de leur exécution. Le décodage dans le décodeur 7 entraîne, pendant un même cycle le décodage dans le décodeur 13. Tout naturellement, figure 3c au troisième cycle montré, le processeur 1 exécute l'instruction IP1 (on verra par ailleurs comment s'exécute le transfert des données correspondant). Au cycle suivant (quatrième cycle), l'opérateur arithmétique du circuit de traitement du processeur 1 est mis en sommeil: il ne traite pas les données. Par contre le coprocesseur 2 exécute l'instruction IC1. Le coprocesseur 2 exécute l'instruction IC1 parce qu'il a reçu au préalable en provenance du processeur 1 le signal VCI. Le signal VCI est produit dans le décodeur 7 au moment du décodage de l'instruction IC1. Le signal VCI est activé pendant seulement un cycle: celui qui correspond au décodage de l'instruction coprocesseur et qui précède son exécution (qui dure un cycle dans le cas que nous considérerons). Le décodage d'une instruction étant quasiment instantané, puisque un décodeur d'instruction ne comporte que des portes logiques directement connectées entre ses fils d'entrée et ses fils de sortie, le signal VCI est disponible dès le début du décodage. De cette façon le décodeur 13 le reçoit également au début de son décodage de l'instruction IC1. Une fois décodée (valablement), l'instruction IC1 est exécutée au cycle suivant par le circuit 16 du coprocesseur. Si le signal VCI n'a pas été émis, le décodeur 13 n'a pas été validé, il ne produit pas en sortie des signaux de contrôle interprétables par le circuit 16. Le circuit de validation dans le décodeur 13 peut tout simplement être une entrée supplémentaire de décodeur d'instruction. Cette entrée joue le même rôle qu'une entrée normale, sauf qu'elle reçoit le signal VCI et non des signaux transmis depuis la mémoire d'instructions.

L'instruction IP2 présente par ailleurs une particularité. En effet cette instruction est prévue pour durer dès le départ deux, voire plusieurs, cycles de travail du processeur 1. Le processeur 1 prévoit donc dans le décodeur 7 des moyens pour reconnaître que l'instruction est une instruction à deux cycles: par exemple le dixième bit des onze bits du code instructions est toujours à 1 dans ce cas. En reconnaissant cette situation le décodeur 7 est déjà capable, à l'issue du décodage de l'instruction IP2, de faire suspendre momentanément par un ordre 27 du séquenceur 10 la lecture en cascade (en pipe line) de la mémoire d'instructions 3 (figure 3b). Au cycle suivant le décodage de l'instruction IP2, celle-ci est exécutée par le circuit de traitement 9. Elle comporte une première partie d'instruction IP2a et une deuxième partie à exécuter à un cycle suivant IP2b. Un tel fonctionnement est de type connu.

Avec l'ordre 27 on a de préférence maintenu sur les bus 4 et 5 la présence de l'instruction IC2. Il importe donc de n'en autoriser le décodage qu'au début de la dernière partie de l'instruction IP2. Un ordre 28 va donc être produit à cet effet par le séquenceur 10.

La production de l'ordre 28 marquant en définitive la fin d'une instruction multi-cycles effectuée par le processeur 1, peut être obtenue de deux façons. D'une part au moment du décodage de l'instruction IP2, à la quatrième période montrée sur les figures 3a à 3d, il est possible de savoir que l'on a affaire à une instruction multi-cycles de deux, n cycles. On peut dans ces conditions mettre en service un compteur/décompteur avec une valeur initiale de décomptage 2-1, n-1, ainsi de suite, afin que ce compteur/décompteur produise l'ordre 28 adéquat le moment venu.

D'une manière préférée, on a procédé légèrement différemment en traitant les valeurs des instructions IP2a ou IP2b chargées dans le registre d'instructions 6. Il est possible en effet de filtrer (dans un circuit assimilé en définitive à un décodeur) ces instructions pour produire un signal quand une de ces instructions a une conformation particulière. On pourra par exemple décider que des bits de poids donné du code instruction enregistré dans le registre instructions 6 auront une valeur déterminée pour signaler que l'instruction élémentaire chargée est la dernière (ou l'avant-dernière). On peut se servir de cette détection pour produire l'ordre 28, au moment du chargement de l'instruction élémentaire concernée (ou (ou à la fin de l'exécution de l'instruction élémentaire précédente).

De préférence, le processeur 1 et le coprocesseur 2 sont réalisés sur un même circuit intégré dont une partie de la surface est dédiée au processeur 1 avec tous les circuits indiqués ci-dessus et dont l'autre partie, plus ou moins grosse selon les cas est dédiée à des traitements spécifiques. Le processeur 1 a un circuit 9 de complexité de programmation très grande du fait de son aptitude à traiter environ un millier d'instructions. Par contre le circuit programmable 16 a une complexité de programmation bien moindre, le circuit de traitement 16 pouvant être, en lui-même, compliqué. Ce circuit de traitement 16 compliqué peut être testé par ailleurs, dans chacune des 16 configurations possibles correspondant aux 16 instructions qu'il est susceptible d'effectuer. Agir de cette façon est alors beaucoup plus simple que de vouloir incorporer les 16 instructions dans le jeu d'instructions exécutables par le processeur 1.

On remarque par ailleurs que le choix délibéré du fonctionnement en cascade tel que montré sur les figures 3a à 3e, et la solution consistant à n'autoriser le travail du coprocesseur 2 que pendant un cycle d'instruction, simplifient très nettement la relation entre le processeur et le coprocesseur et donc limitent la perte de temps nécessaire pour mettre le coprocesseur 2 en service. En pratique dans l'invention la perte de temps est nulle, le coprocesseur démarre dans le temps de cycle suivant. Il serait néanmoins possible d'envisager d'avoir des instructions multi-cycles effectuées par le coprocesseur 2 en prévoyant dans le séquenceur 10 et dans le décodeur 7 des moyens pour produire des ordres comparables aux ordres 27 et 28 et pour bloquer le processeur 1 cette fois, au lieu de bloquer le coprocesseur 2.

Pour simplifier également la fonction du coprocesseur 2 on a prévu dans l'invention que les opérations d'extraction des mémoires de données X ou Y et de chargement de ces mémoires de données sont effectuées par le processeur 1. Ceci signifie que quel que soit le circuit de traitement 9 ou 16 qui exécute l'instruction, la gestion du bus 24 de données et des mémoires de données X ou Y est laissée à l'initiative du processeur 1. Ceci n'est pas compliqué à concevoir puisque c'est de toute façon ce que fait un processeur normal. Autrement dit à chaque temps de cycle t, il y a lecture d'une instruction de rang t (figure 3a), décodage d'une instruction de rang t-1 (figure 3b), exécution dans le processeur 1 ou dans le coprocesseur 2 d'une instruction de rang t-2 (figures 3c, 3d), une transmission aux mémoires X ou Y des données relatives à l'instruction de rang t-2, disponibles selon le cas dans les registres de données 8 ou 15, et fourniture aux mémoires X ou Y ou aux registres 8 et 15 des données traitées par l'instruction de rang t-1. Le traitement de l'instruction par le processeur, ou le coprocesseur, se poursuit ainsi, en fonction de la séquence des ordres VCI reçus, par le prélèvement, à l'initiative du processeur 1, des données traitées sur les registres de sortie de données concernées en direction des mémoires concernées. Toutes ces opérations sont classiquement effectuées par un circuit intégré à processeur, notamment le circuit à microprocesseur dit ST9 du demandeur.

## Revendications

1. Circuit électronique comportant une mémoire d'instruction, un processeur (1) de traitement et un coprocesseur (2) de traitement, dans lequel
- le processeur et le coprocesseur sont reliés en parallèle à la mémoire (3) d'instructions par au moins certains (5) des fils d'un bus (4) de sortie de données de cette mémoire d'instructions pour recevoir en même temps une instruction provenant de cette mémoire d'instructions;
- le processeur et le coprocesseur comportent chacun un décodeur d'instructions (7,13),
le circuit étant caractérisé en ce que
- le processeur comporte, dans son décodeur (7) d'instructions, un circuit pour reconnaître, au décodage de cette instruction, que cette instruction reçue doit être exécutée, au moins en partie, par le coprocesseur, et pour transmettre (11) au coprocesseur, pendant le cycle du processeur où cette instruction est décodée, un signal (VCI) de reconnaissance correspondant;
- le coprocesseur comporte, dans son décodeur d'instructions, un circuit de décodage de cette instruction reçue et un circuit de validation pour l'autoriser, quand il reçoit le signal de reconnaissance, à exécuter ultérieurement cette instruction reçue, le décodage de l'instruction et sa validation se produisant au cours d'un même cycle.

2. Circuit selon la revendication 1, caractérisé en ce que
- le circuit électronique est un circuit intégré monolithique,
- le décodeur (13) d'instructions du coprocesseur est relié à ce bus de sortie de cette mémoire d'instructions, et en ce que le coprocesseur comporte en outre
- un registre (12) d'instructions relié à ce décodeur pour stocker et permettre l'exécution d'instructions décodées,
- des circuits (16) de traitement programmables pour traiter des données en fonctions d'instructions transmises par le registre d'instructions,
- des registres (14) d'entrée de données reliés en entrée à un bus (24) de données du circuit intégré et en sortie au circuit de traitement du coprocesseur,
- des registres (15) de sortie de données reliés en entrée au circuit (16) de traitement du coprocesseur et en sortie au bus de données du circuit intégré.

3. Circuit selon l'une des revendications 1 à 2, caractérisé en ce qu'il comporte
- un autre (B) coprocesseur relié en parallèle avec le coprocesseur pour traiter simultanément des données venant de deux mémoires (X,Y) de données différentes.

4. Circuit selon l'une des revendications 1 à 3, caractérisé en ce que le processeur (1) comporte un circuit pour retarder l'émission du signal de reconnaissance si le processeur est en train d'exécuter une instruction multi-cycles qui dure plus longtemps qu'un cycle de travail de ce processeur.

5. Circuit selon la revendication 4, caractérisé en ce que le circuit pour retarder comporte
- dans le décodeur d'instructions du processeur, un circuit de décodage pour détecter qu'une instruction multi-cycles est constituée de plusieurs instructions élémentaires ordonnées, la dernière instruction élémentaire étant reconnaissable, et
- un circuit pour autoriser la transmission du signal de reconnaissance à la fin de l'instruction multi-cycles.

6. Circuit selon la revendication 4, caractérisé en ce que le circuit pour retarder comporte
- dans le décodeur d'instructions du processeur, un circuit de décodage pour détecter qu'une instruction multi-cycles est présente, et
- un compteur-décompteur, mis dans un état de départ dépendant de la durée de l'instruction multi-cycles à exécuter par le processeur, et produisant un signal pour autoriser la transmission du signal de reconnaissance à la fin de l'instruction multi-cycles.

7. Procédé d'utilisation d'un processeur (1) de traitement et d'un coprocesseur (2) de traitement, comportant les étapes suivantes:
- on envoie simultanément au processeur et au coprocesseur au moins une même partie d'une instruction (17-23) par au moins certains (5) des fils d'un bus (4) de sortie de données d'une mémoire d'instructions;
- pendant un même cycle du processeur, on décode l'instruction à la fois dans le processeur et dans le coprocesseur;
le procédé étant caractérisé en ce qu'il comporte les étapes suivantes:
- au cours d'un cycle donné du processeur, on décode l'instruction reçue dans le processeur et on y produit un signal de reconnaissance (VCI) correspondant à ce qu'une instruction décodée doit être exécutée par le coprocesseur, et
- durant ce même cycle, le coprocesseur reçoit dans son circuit de validation ce signal de reconnaissance (VCI), et décode l'instruction reçue qu'il est ainsi autorisé à exécuter à un cycle suivant.

8. Procédé selon la revendication 7, caractérisé en ce que
- on fait envoyer par un séquenceur (10) du processeur des commandes synchronisées à un décodeur (13) d'instructions du coprocesseur, à un registre (12) d'instructions de ce coprocesseur, à des circuits (16) de traitement programmables de ce coprocesseur, à des registres (14) d'entrée de données et à des registres (15) de sortie de données du coprocesseur.

9. Procédé selon l'une des revendications 7, ou 8 caractérisé en ce que:
- on fait gérer par le processeur les accès en mémoire nécessaires pour le fonctionnement du coprocesseur.

## Patentansprüche

1. Elektronische Schaltung, mit einem Befehlsspeicher, einem Verarbeitungsprozessor (1) und einem Verarbeitungscoprozessor (2), in der
- der Prozessor und der Coprozessor parallel mit dem Befehlsspeicher (3) wenigstens über bestimmte (5) der Drähte eines Datenausgangsbusses (4) dieses Befehlsspeichers verbunden sind, um gleichzeitig einen von diesem Befehlsspeicher stammenden Befehl zu empfangen; und
- der Prozessor und der Coprozessor jeweils einen Befehlsdecodierer (7, 13) enthalten,
wobei die Schaltung dadurch gekennzeichnet ist, daß
- der Prozessor in seinem Befehlsdecodierer (7) eine Schaltung enthält, um bei der Decodierung dieses Befehls zu erkennen, daß dieser empfangene Befehl wenigstens zum Teil vom Coprozessor ausgeführt werden soll, und um an den Coprozessor während des Zyklus des Prozessors, in dem dieser Befehl decodiert wird, ein entsprechendes Erkennungssignal (VCI) zu übertragen;
- der Coprozessor in seinem Befehlsdecodierer eine Schaltung für die Decodierung dieses empfangenen Befehls sowie eine Validierungsschaltung enthält, um bei Empfang des Erkennungssignals die spätere Ausführung dieses empfangenen Befehls zuzulassen, wobei die Decodierung des Befehls und seine Validierung während desselben Zyklus erfolgen.

2. Schaltung nach Anspruch 1, dadurch gekennzeichnet, daß
- die elektronische Schaltung eine monolithische integrierte Schaltung ist und
- der Befehlsdecodierer (13) des Coprozessors mit diesem Ausgangsbus dieses Befehlsspeichers verbunden ist, und daß der Coprozessor außerdem enthält:
- ein Befehlsregister (12), das mit diesem Decodierer verbunden ist, um decodierte Befehle zu speichern und deren Ausführung zu ermöglichen,
- programmierbare Verarbeitungsschaltungen (16), um Daten in Abhängigkeit von vom Befehlsregister übertragenen Befehlen zu verarbeiten,
- Dateneingangsregister (14), die mit ihrem Eingang mit einem Datenbus (24) der integrierten Schaltung verbunden sind und mit ihrem Ausgang mit der Verarbeitungsschaltung des Coprozessors verbunden sind,
- Datenausgangsregister (15), die mit ihrem Eingang mit der Verarbeitungsschaltung (16) des Coprozessors und mit ihrem Ausgang mit dem Datenbus der integrierten Schaltung verbunden sind.

3. Schaltung nach einem der Ansprüche 1 und 2, dadurch gekennzeichnet, daß sie enthält:
- einen weiteren (B) Coprozessor, der zum Coprozessor parallelgeschaltet ist, um gleichzeitig Daten zu verarbeiten, die von zwei verschiedenen Datenspeichern (X, Y) kommen.

4. Schaltung nach einem der Ansprüche 1 bis 3, dadurch gekennzeichnet, daß der Prozessor (1) eine Schaltung enthält, um das Senden des Erkennungssignals zu verzögern, falls der Prozessor momentan einen Multizyklusbefehl ausführt, der länger als ein Arbeitszyklus dieses Prozessors dauert.

5. Schaltung nach Anspruch 4, dadurch gekennzeichnet, daß die Verzögerungsschaltung enthält:
- im Befehlsdecodierer des Prozessors eine Decodierungsschaltung, um festzustellen, daß ein Multizyklusbefehl aus mehreren geordneten Elementarbefehlen gebildet ist, wobei der letzte Elementarbefehl erkennbar ist, und
- eine Schaltung, die die Übertragung des Erkennungssignals am Ende des Multizyklusbefehls zuläßt.

6. Schaltung nach Anspruch 4, dadurch gekennzeichnet, daß die Verzögerungsschaltung enthält:
- im Befehlsdecodierer des Prozessors eine Decodierungsschaltung zum Feststellen, daß ein Multizyklusbefehl vorliegt, und
- einen Aufwärts/Abwärtszähler, der in Abhängigkeit von der Dauer des vom Prozessor auszuführenden Multizyklusbefehls in einen Anfangszustand versetzt wird und ein Signal erzeugt, um die übertragung des Erkennungssignals am Ende des Multizyklusbefehls zuzulassen.

7. Verfahren zum Verwenden eines Verarbeitungsprozessors (1) und eines Verarbeitungscoprozessors (2), mit den folgenden Schritten:
- Schicken wenigstens des gleichen Teils eines Befehls (17-23) wenigstens über bestimmte (5) der Drähte eines Datenausgangsbusses eines Befehlsspeichers gleichzeitig an den Prozessor und an den Coprozessor; und
- Decodieren des Befehls im selben Zyklus des Prozessors zugleich im Prozessor und im Coprozessor;
wobei das Verfahren dadurch gekennzeichnet ist, daß es die folgenden Schritte enthält:
- während eines gegebenen Zyklus des Prozessors Decodieren des im Prozessor empfangenen Befehls und dort Erzeugen eines Erkennungssignals (VCI), das der Tatsache entspricht, daß ein decodierter Befehl vom Coprozessor ausgeführt werden soll, und
- im selben Zyklus Empfangen dieses Erkennungssignals (VCI) durch den Coprozessor in seiner Validierungsschaltung und Decodieren des empfangenen Befehls, der somit in einem folgenden Zyklus ausgeführt werden darf, durch den Coprozessor.

8. Verfahren nach Anspruch 7, dadurch gekennzeichnet, daß
- von einer Ablauffolgesteuerung (10) des Prozessors Befehle, die mit einem Befehlsdecodierer (13) des Coprozessors synchronisiert sind, an ein Befehlsregister (12) dieses Coprozessors, an programmierbare Verarbeitungsschaltungen (16) dieses Coprozessors, an Dateneingangsregister (14) sowie an Datenausgangsregister (15) des Coprozessors geschickt werden.

9. Verfahren nach einem der Ansprüche 7 oder 8, dadurch gekennzeichnet, daß:
- die für den Betrieb des Coprozessors notwendigen Speicherzugriffe durch den Prozessor verwaltet werden.

## Claims

1. Electronic circuit including an instruction memory, a processing processor (1) and processing coprocessor (2), in which
- the processor and coprocessor are connected in parallel to the instruction memory (3) by at least some (5) of the wires of a data output bus (4) of this instruction memory in order to receive at the same time an instruction coming from this instruction memory;
- the processor and coprocessor each have an instruction decoder (7, 13),
the circuit being characterised in that
- the processor has, in its instruction decoder (7), a circuit for recognizing, on decoding this instruction, that this instruction received must be executed, at least partly, by the coprocessor, and for transmitting (11) to the coprocessor, during the cycle of the processor in which this instruction is decoded, a corresponding recognition signal (VCI);
- the coprocessor has, in its instruction decoder, a circuit for decoding this received instruction and a validation circuit for authorizing it, when it receives the recognition signal, to subsequently execute this received instruction, the decoding of the instruction and its validation taking place during one and the same cycle.

2. Circuit according to Claim 1, characterised in that
- the electronic circuit is a monolithic integrated circuit,
- the instruction decoder (13) of the coprocessor is connected to this output bus of this instruction memory, and in that the coprocessor also has
- an instruction register (12) connected to this decoder for storing and allowing the execution of decoded instructions,
- programmable processing circuits (16) for processing data according to instructions transmitted by the instruction register,
- data input registers (14) connected at their input to a data bus (24) of the integrated circuit and at their output to the processing circuit of the coprocessor,
- data output registers (15) connected at their input to the processing circuit (16) of the coprocessor and at their output to the data bus of the integrated circuit.

3. Circuit according to one of Claims 1 to 2, characterised in that it includes
- another coprocessor (B) connected in parallel with the coprocessor for simultaneously processing data coming from two different data memories (X, Y).

4. Circuit according to one of Claims 1 to 3, characterised in that the processor (1) has a circuit for delaying the sending of the recognition signal if the processor is in the process of executing a multicycle instruction which lasts longer than a working cycle of this processor.

5. Circuit according to Claim 4, characterised in that the delaying circuit includes
- in the instruction decoder of the processor, a decoding circuit for detecting that a multicycle instruction consists of several ordered elementary instructions, the last elementary instruction being recognizable, and
- a circuit for authorizing the transmission of the recognition signal at the end of the multicycle instruction

6. Circuit according to Claim 4, characterised in that the delaying circuit includes
- in the instruction decoder of the processor, a decoding circuit for detecting that a multicycle instruction is present, and
- a counter/downcounter, put in an initial state depending on the duration of the multicycle instruction to be executed by the processor, and producing a signal for authorizing the transmission of the recognition signal at the end of the multicycle instruction.

7. Method of using a processing processor (1) and a processing coprocessor (2), including the following steps:
- at least one and the same part of an instruction (17-23) is sent simultaneously to the processor and coprocessor by at least some (5) of the wires of a data output bus (14) of an instruction memory;
- during one and the same cycle of the processor, the instruction is decoded both in the processor and in the coprocessor;
the method being characterised in that it includes the following steps:
- during a given cycle of the processor, the instruction received is decoded in the processor and a recognition signal (VCI) is produced therein corresponding to the fact that a decoded instruction must be executed by the coprocessor, and
- during this same cycle, the coprocessor receives this recognition signal (VCI) in its validation circuit, and decodes the instruction received, which it is thus authorized to execute during a following cycles.

8. Method according to Claim 7, characterised in that
- synchronized commands are caused to be sent by a sequencer (10) of the processor to an instruction decoder (13) of the coprocessor, to an instruction register (12) of this coprocessor, to programmable processing circuits (16) of this coprocessor, to data input registers (14) and to data output registers (15) of the coprocessor.

9. Method according to one of Claims 7 or 8, characterised in that:
- the memory accesses necessary for the functioning of the coprocessor are caused to be managed by the processor.
